(19) **Europäisches Patentamt / European Patent Office / Office européen des brevets**

(11) **EP 2 778 818 B1**

(12) **EUROPEAN PATENT SPECIFICATION**

(45) Date of publication and mention
of the grant of the patent:
**19.04.2017  Bulletin 2017/16**

(51) Int Cl.:
***G05B 23/02*** (2006.01)

(21) Application number: **13158847.7**

(22) Date of filing: **12.03.2013**

(54) **Identification of faults in a target system**

Identifikation von Fehlern in einem Zielsystem

Identification de défauts dans un système cible

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.09.2014  Bulletin 2014/38**

(73) Proprietor: **Hitachi, Ltd.
Tokyo (JP)**

(72) Inventors:
• **KONO, Toshiaki
London SW1V 2SX (GB)**

• **MORITA, Kiyoshi
London N3 1PS (GB)**

(74) Representative: **Gill, Stephen Charles et al
Mewburn Ellis LLP
City Tower
40 Basinghall Street
London EC2V 5DE (GB)**

(56) References cited:
**WO-A1-2012/146908     US-A1- 2003 004 765
US-A1- 2007 226 540     US-A1- 2009 326 784
US-A1- 2010 262 867**

## Description

Field of the Invention

The present invention relates to a method and a system for identifying faults in a target system.

Background of the Invention

Fault finding in complex systems (such as railway vehicles) generally requires a high level of knowledge and experience on the part of fault-finding personnel. Thus support systems have been developed to assist with the fault-finding procedure. Such support systems may generate instructions for a user, such as a maintenance worker or engineer, based on the contents of a knowledge base. To filter out irrelevant failure modes, the support systems may also utilize sensors, observations, and/or testing results. Where more than one failure mode may explain the observed or reported failure symptoms, rankings can be applied to the failure modes to assist efficient fault finding.

However, particularly where the person making the initial incident report is not a specialist in fault finding (in the case of a railway vehicle, for example, the initial report may be from a train driver rather than a specialist engineer), a problem arises in that the report may contain incorrect or misleading information. In such a case, the support system may filter out the correct failure mode and/or may provide wrong failure modes and instructions. Similar mistakes can occur if there is an error in sensor data or subsequent testing of the complex system. WO 2012/146908 proposes a method of generating symptom electronic data for use in a diagnostic system.

Summary of the Invention

An aim of the present invention is therefore to provide a method and a support system for identifying faults in a target system which take account of the possibility of mistakes in incident reports or other data.

In a first aspect, the present invention provides a method of identifying faults in a target system according to claim 1.

Advantageously, by expanding the number of candidate failure mode and symptom data records in this way, the method can systematically take account of errors, inaccuracies, uncertainties etc. in failure identification procedures.

As an example of the systematic approach to fault identification, the incident report correction database may specify links between pairs of the data records from the failure knowledge database when a functional relation exists between the respective failure modes of the paired data records. In the identifying step, the data records of the alternative components and/or the alternative failure symptoms can thus be directly or indirectly linked.

However, the incident report correction database may specify links between pairs of the data records from the failure knowledge database even when a functional relation does not exists between the respective failure modes of the paired data records. For example, links can be specified between data records of corresponding components to take account of the possibility that a component has been mistakenly identified as another component in the incident report. This type of mistake can happen when there are similar or identical components in different locations. Similarly, links can be specified between data records when a failure symptom of one component can be mistaken for a failure symptom of another component. This type of mistake can happen when the failure symptom is a noise but the source of that noise is not easy to pinpoint.

The method may further include steps of: collecting sensor measurements relating to one or more failure modes; and before the calculating step, filtering the identified candidate failure mode and symptom data records by excluding identified candidate failure mode and symptom data records having failure modes which are inconsistent with the collected sensor measurements. Thus the method can also take account of sensor measurements in a systematic way. Moreover, the method may further include a step of providing a sensor measurement modification database which specifies possible modifications to the collected sensor measurements; wherein the filtering step excludes identified candidate failure mode and symptom data records having failure modes which are inconsistent with modified collected sensor measurements derived from the sensor measurement modification database; and wherein the confidence values are calculated for the filtered candidate data records. Thus in the same way that the incident report correction database can take account of errors, inaccuracies, uncertainties etc. in failure identification procedures, the sensor measurement modification database can take account of errors, inaccuracies, uncertainties etc. in the sensor measurement.

In a second aspect, the present invention provides a method for repairing a target system including:

performing the method of identifying faults of the first aspect; and
performing maintenance on the target system according to the generated maintenance instruction.

Further aspects of the present invention provide: a computer program comprising code which, when run on a computer, causes the computer to perform the method of the first aspect; a computer readable medium storing a computer program comprising code which, when run on a computer, causes the computer to perform the method of the first aspect; and a computer system programmed to perform the method of the first aspect.

For example, a computer system (corresponding to the first aspect) can be provided for identifying faults in a target system, the system including:

> a failure knowledge database for the target system, wherein the failure knowledge database specifies a plurality of failure mode and symptom data records, each data record identifying (i) a component of the target system, (ii) a failure mode for that component and (iii) a corresponding failure symptom;
> one or more processors configured to perform the steps of:
>
>> (a) receive an incident report specifying a particular component and a reported failure symptom;
>> (b) identify candidate failure mode and symptom data records which may explain the incident report by reference to the failure knowledge database;
>> (c) calculate respective confidence values for the candidate data records;
>> (d) compare the calculated confidence values; and
>> (e) generate a maintenance instruction for the target system, the instruction pertaining to at least the candidate data record having the highest calculated confidence value;
>
> wherein the system further includes an incident report correction database which specifies, for each of at least a subset of the components of the failure knowledge database, one or more alternative components which are possible sources of reported failure symptoms and/or one or more possible alternative failure symptoms to reported failure symptoms, the alternative components and the alternative failure symptoms having corresponding failure mode and symptom data records in the failure knowledge database; and
> wherein the identifying step uses the incident report correction database to expand the number of identified candidate failure mode and symptom data records to include data records of alternative components and/or alternative failure symptoms which may explain the incident report.

The databases of this example system may be stored on computer-readable medium or media. The example system may further include a display device e.g. for displaying any one or more of: the received incident report, failure mode and symptom data records, calculated confidence values, generated maintenance instructions etc.

Optional features of the invention will now be set out. These are applicable singly or in any combination with any aspect of the invention.

The databases may be physically separate databases or may be combined in a single physical database.

The method may further include, after the comparing step and before the step generating a maintenance instruction, steps of: generating a diagnosis instruction for the target system, the instruction pertaining to at least the candidate data record having the highest calculated confidence value; performing diagnostics on the target system to determine a likelihood of the failure mode of the or each candidate data record in the diagnosis instruction; and adjusting the calculated confidence value of the or each candidate data record in the diagnosis instruction on the basis of the determined likelihood. Thus interim diagnostic evaluations can be used to improve the calculated confidence values. The step of performing diagnostics can include producing a diagnosis result which can be included in the maintenance instruction.

The method may further include a step of providing a maintenance instruction database which specifies maintenance procedures for failure modes of the target system. The generated maintenance instruction can then provide a maintenance procedure, derived from the maintenance instruction database, corresponding to the failure mode of the or each candidate data record in the maintenance instruction.

The target system can be a railway vehicle, railway infrastructure or a railway operation system.

Further optional features of the invention are set out below.

Brief Description of the Drawings

Embodiments of the invention will now be described by way of example with reference to the accompanying drawings in which:

> Figure 1 shows a diagrammatic overview of a support system for identifying faults in a target system;
>
> Figure 2 shows an example of a failure mode, effect (i.e. symptom) and causality analysis (FMECA) for a railway vehicle;
>
> Figure 3 shows a diagrammatic representation of one FMECA record;
>
> Figure 4 shows a diagrammatic representation of a number of structured FMECA records grouped into blocks and connected together along failure-cause links;
>
> Figure 5 shows a diagrammatic representation number of structured FMECA records for railway vehicle components of differing complexity and functionality levels;
>
> Figure 6 shows an optional extension to the FMECA records, in which each record also has a link to an inspection instruction and one or more link(s) to sensor data;

Figure 7 shows a flow chart of a first comparative example of a procedure for fault identification;

Figure 8 shows an example incident report involving a railway vehicle door;

Figure 9 shows the linked records of Figure 4 with a dashed line box indicating a user-identified candidate record, and a dotted line box indicating an expanded number of directly or indirectly functionally linked candidate records;

Figure 10 shows a flow chart of a second comparative example of a procedure for fault identification;

Figure 11 shows the linked records of Figure 9 with the dotted line box indicating the expanded number of directly or indirectly functionally linked candidate records, and a dash-dotted box indicating candidate records filtered out from the expanded number; and

Figure 12 shows a flow chart of an embodiment of a procedure for fault identification;

Detailed Description and Further Optional Features of the Invention

The ensuing description provides preferred exemplary embodiment(s) only, and is not intended to limit the scope, applicability or configuration of the invention. Rather, the ensuing description of the preferred exemplary embodiment(s) will provide those skilled in the art with an enabling description for implementing a preferred exemplary embodiment of the invention, it being understood that various changes may be made in the function and arrangement of elements without departing from the scope of the invention.

Specific details are given in the following description to provide a thorough understanding of the embodiments. However, it will be understood by one of ordinary skill in the art that embodiments maybe practiced without these specific details. For example, well-known circuits, processes, algorithms, structures, and techniques may be shown without unnecessary detail in order to avoid obscuring the embodiments.

Also, it is noted that embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

As disclosed herein, the term "computer readable medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

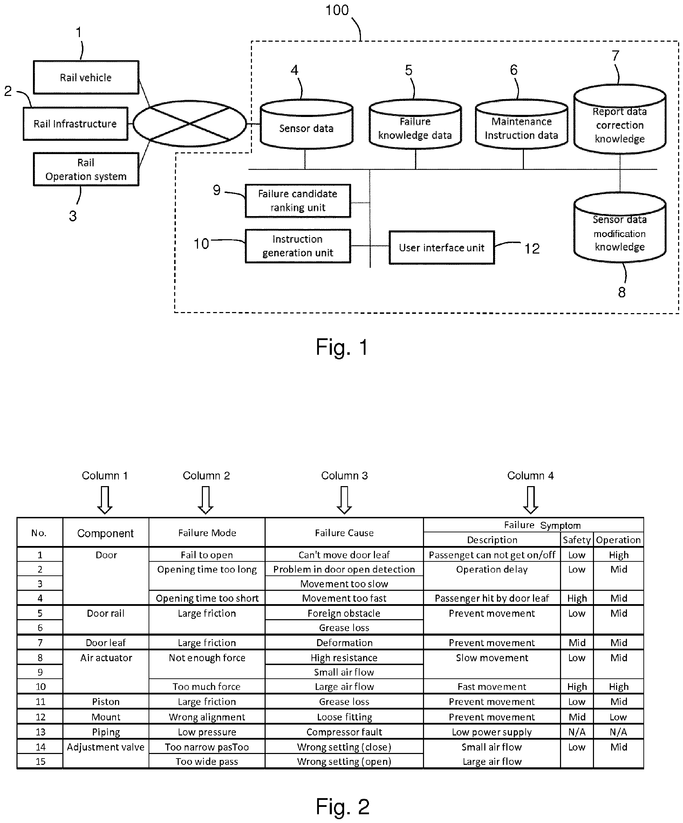

Figure 1 shows a diagrammatic overview of a support system 100 for identifying faults in a target system, which may be, for example, a railway vehicle 1, railway infrastructure 2 or a railway operational system 3. The system contains a number of databases including: a sensor database 4 which contains sensor measurements obtained from the target system, a failure knowledge database 5 which contains a failure mode and symptom data structure, a maintenance instruction database 6 which contains maintenance procedures for failure modes of the target system, a report data correction knowledge database 7 which specifies alternative target system components and alternative failure symptoms for expanding the numbers of possible failure candidates, and a sensor data modification knowledge database 8 which specifies possible modifications of sensor measurements. The support system also has processing units including: a failure candidate ranking unit 9, an instructions generation unit 10, and a user interface unit 12. The roles of these databases and units will be discussed in more detail below.

The support system 100 enables an approach to fault identification in the target system which takes into account in a systematic manner the possibility of incorrect information having been provided to the user.

A significant element of the system 100 is the failure knowledge database 5 and the report correction database 7, which may contain structured records of the type described below in relation to Figures 2 to 7.

Figure 2 shows a table providing an example of a failure mode, effect (i.e. symptom) and causality analysis (FMECA) for a railway vehicle. The table has respective columns for specifying a component (column 1), a failure mode (column 2), a failure cause (column 3), and a failure symptom (column 4). Each of the rows (numbered 1 to 15) of the FMECA table provides a different failure cause for different parts of the railway vehicle, and associates with each cause a failure mode (i.e. an observable, measurable, or otherwise detectable, technical result of the failure cause) and a failure symptom. The failure symptom, which can be the same for different failure causes and modes, is the effect the failure has on the operation of the vehicle. More particularly, each combination of a given failure symptom and a given component produces one FMECA record. Thus row no. 1 of the FMECA table having the failure symptom "Passenger cannot get on/off" for the door component is one FMECA record, and the row nos. 2 and 3 of the FMECA table having the failure symptom "Operation delay" for the door component is another FMECA record.

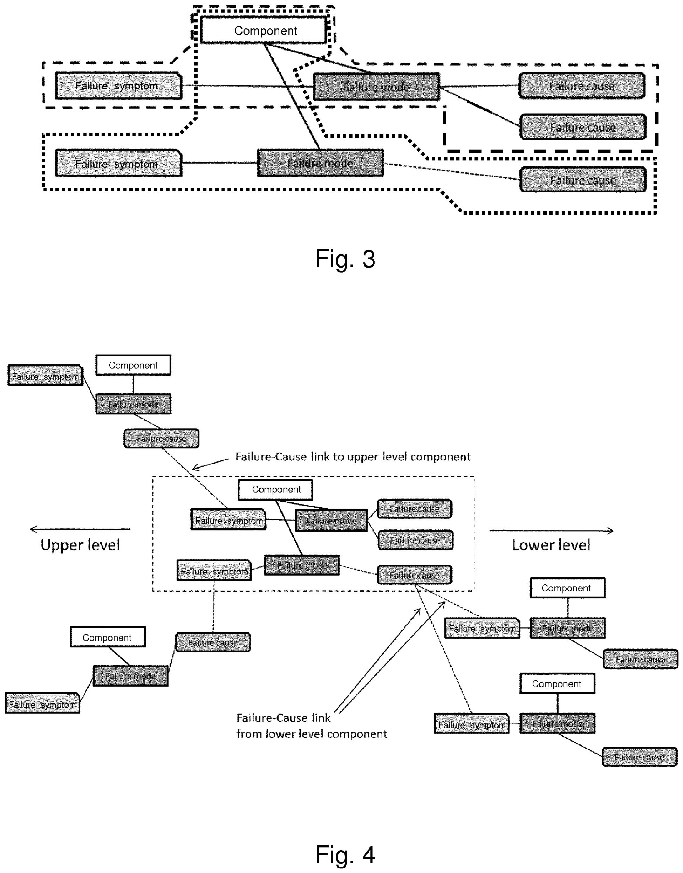

Figure 3 shows a diagrammatic representation of one FMECA record, which as indicated by the dashed line box are a given component, a failure symptom, a failure mode and one or more failure causes which can produce the failure mode and symptom. As indicated by the dotted line box, however, a given component can also feature in another FMECA record. Each component can be a multi-part component.

The FMECA records can be grouped into blocks, each corresponding to a different component, as shown in Figure 4 in which one block is indicated by the dashed line box. Further, as shown in Figure 4, the records can be linked to other records along failure-cause links. A failure-cause link can be made when a functional relation exists between the respective failure modes of two records. In particular, the failure cause of a higher functional level record can correspond to the failure symptom of a linked lower functional level record. This linkage produces a hierarchy of records, in which records covering upper level functionality are linked initially directly and then indirectly to progressively lower level functionality records.

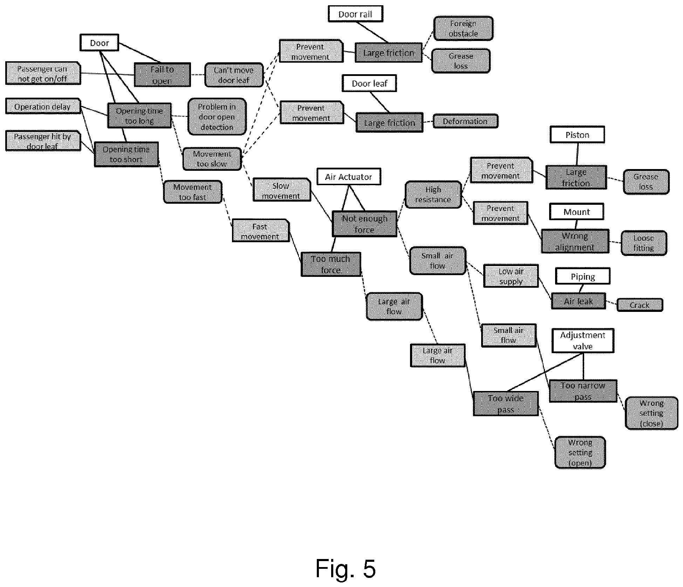

The functionality levels typically correspond to the size and/or complexity of the components. For example, Figure 5 shows FMECA records for railway vehicle components of differing complexity. Upper level functionality is associated with a door component, which has several constituent parts. Mid level functionality is associated with those different parts, such as a door rail and an air actuator. Lower level functionality is associated in turn with constituent parts of the mid level components, which in the case of the air actuator can be a piston, a mount, piping and an adjustment valve.

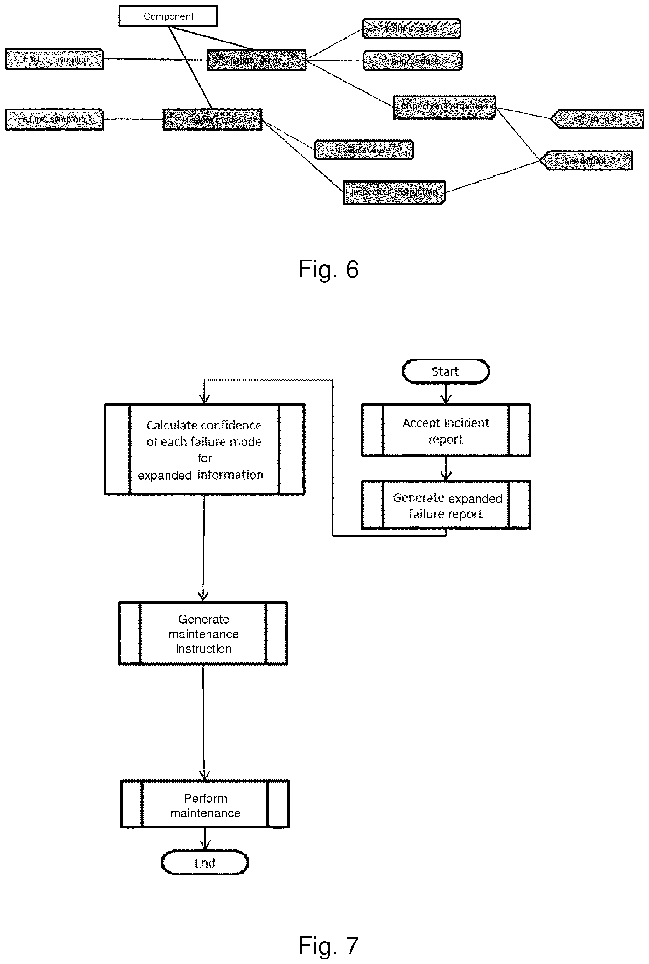

Figure 6 shows an optional extension to the structured FMECA records, in which each record also has a link to an inspection instruction and one or more link(s) to sensor data that may be obtained from such an inspection. The sensor data can be stored in the sensor database 4.

In terms of implementation, the failure knowledge database 5 can store information providing the basic FMECA records and the report correction database 7 can store information providing the functional linkages between the records.

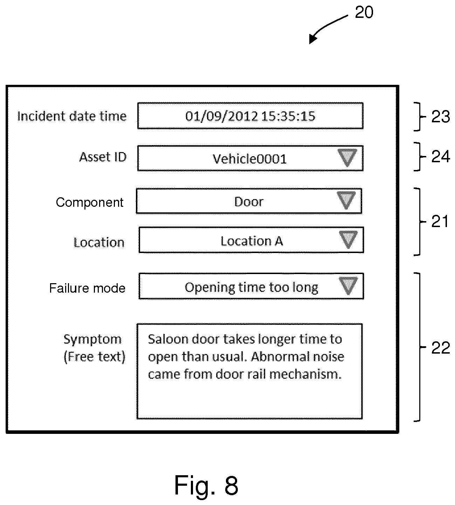

Figure 7 shows a flow chart of a first comparative example of a procedure for fault identification which can use the FMECA records of the type discussed above. At an initial stage of the method an incident report, of the type shown in Figure 8, is generated. The incident report 20 shown in Figure 8 is for an incident involving a railway vehicle door, and specifies a component 21 (i.e. a door in a specific location) and a failure symptom 22. The failure symptom may be recorded in the incident report in free text in terms of general difficulties or problems in operating the vehicle, and/or in more specific terms analogous to the failure mode. The report also contains an incident date and time 23 and an asset ID 24 for the respective vehicle. The report may be generated, for example, by an operator of the vehicle or a maintenance engineer, and is then sent to a user of the support system 100, where it may appear on a display screen.

The user accesses FMECA records for the target system through the failure knowledge database 5, and selects one or more records which appear to correspond to the incident report. Next, the user accesses the report correction database 7, which allows the user to expand the number of records to include records having alternative components and/or having alternative failure symptoms which may explain the incident report. This expansion can be an automated procedure, or can a user guided procedure.

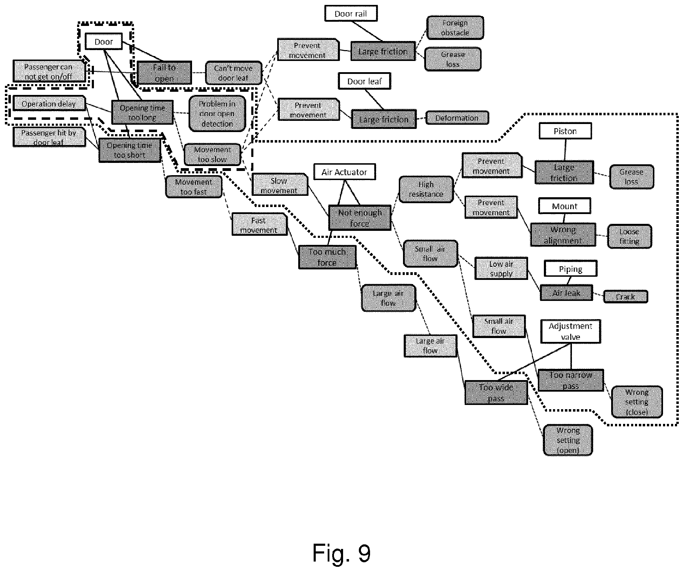

For example, the incident report shown in Figure 8 specifies a door component 21 and a failure symptom 22 which is that the door takes longer than usual to open. As illustrated in Figure 9, which shows the same linked records of Figure 4, the user can identify from this report a candidate record (indicated by a dashed line box) from the failure knowledge database 5 which appears to explain the failure. The report correction database 7, however, allows the number of candidate records to be expanded to include all the lower level records which are directly or indirectly functionally linked to the first record. The expanded number of candidate records is indicated in Figure 9 by the dotted line box.

In addition, as well as expanding the number of candidate records using these functional links, the report correction database 7 may also specify non-functional links between records that can be used to further expand the number of candidate records. These further links can be based on experience of fault finding in the target system. For example, such experience may teach that when an incident report specifies a particular component (the saloon door at location A in the report 20 of Figure 8), there is a possibility that the location will have been incorrectly identified in the report. Thus, the report correction database 7 may also specify links between all the saloon doors of a carriage (e.g. at doors at locations A to D), such that the expanded number of candidate records includes records for the saloon doors at locations B, C and D (and indeed for the corresponding functionally linked records for the doors at locations B, C and D) as well as at location A.

As another example, failure symptoms are often described in terms of abnormal machinery noise. However, as sound can propagate in the target system along paths such that a person hearing a noise may mistakenly associate the noise with the wrong component. Thus, the report correction database 7 may also specify links between records where there is reason to believe that a failure symptom of one component may be mistaken for a failure symptom of another component.

Returning to Figure 7, having identified an expanded list of candidate failure mode and symptom data records which may explain the incident report, these can be consolidated in an expanded failure report. For example, the report of Figure 8 can be expanded to mention also the possibility of the fault being in the doors at locations A, B, C or D. It may not be necessary to refer in the expanded report to the lower level functionally linked records as these can be readily determined from the failure knowledge database 5.

Next, using the failure candidate ranking unit 9 of the support system 100, confidence values can be calculated for the candidate data records. These values can take into account various factors, which may be scored and combined (e.g. added and/or multiplied together) to produce a final confidence value. For example, the factors can include:

•    The original incident report itself, so that if words from a candidate record are contained in the report (whether as part of the component, symptom, cause or mode of the record), the record is given a high score. Lower level records which are functionally linked to the high scoring record may also be given high scores.

•    If a particular record is specified in advance by a user of the support system 100, this, and lower level functionally linked records, may be given high scores.

•    If sensor data indicates that a fault may lie in a particular component, the scores for that record and lower level functionally linked records can be high.

•    If fault probability data are available for the different components of the candidate records, these can be used to provide corresponding scores (probability-based scores for higher level records can be obtained by summing up the scores of functionally linked lower level records).

•    Related to this, a candidate record having a failure mode which has many functional links to lower level records can be given a high score because if the corresponding component is inspected and found not to be defective this can efficiently eliminate many lower level candidate records. For example, checking door-opening functionality can eliminate fault possibilities in many door-opening-related components.

•    Similarly, a candidate record which has many connections to higher level candidate records can be given high score as is a common cause of many possible failure modes.

Still using the failure candidate ranking unit 9, the calculated confidence values can then be compared, for example in the form of list of the candidate records ranked in order of confidence value.

Next, the instruction generation unit 10 of the support system 100 can generate a maintenance instruction for the target system generated. The maintenance instruction may relate only to the candidate data record having the highest confidence value, or may relate to all or part of the ranked list of the candidate records. The instruction may also include maintenance procedures for the relevant failure mode or modes extracted from the maintenance instruction database 6.

The user interface unit 12 of the support system 100 can provide GUIs and prompts for inputting the data required for the above procedure for fault identification, and can also provide GUIs for showing data structures, reports, interim and final results of the procedure etc.

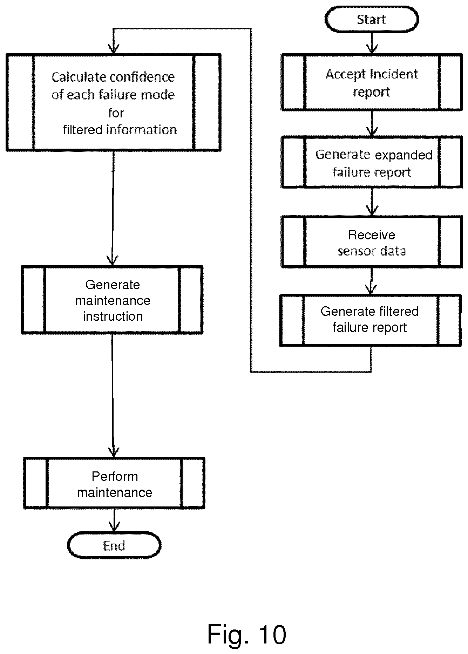

Figure 10 shows, in a second comparative example, a flow chart of an expanded procedure for fault identification. The expanded procedure includes a stage (which is shown after the stage of generating the expanded failure report, but could be earlier) of receiving sensor data. For example, the sensor data may be obtained on the basis inspection instructions linked to the structured FMECA records of the failure knowledge database 5, as illustrated in Figure 6, and stored in the sensor database 4.

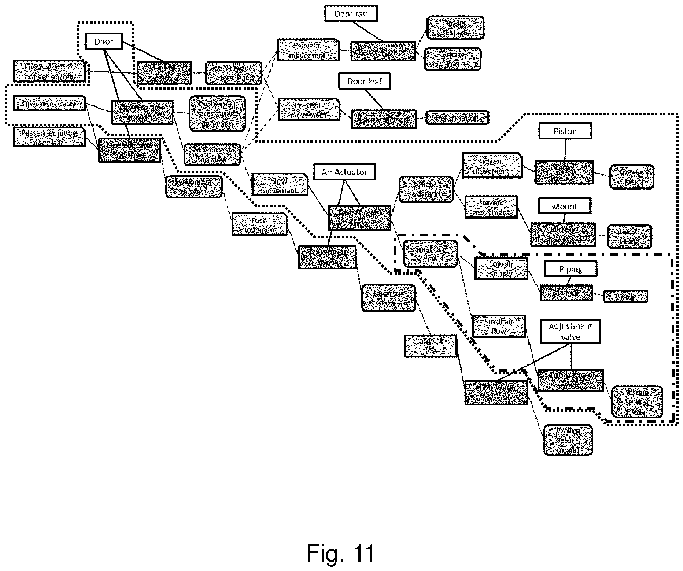

The sensor data can then be used to filter (i.e. reduce in number) the candidate failure mode and symptom data records. For example, as illustrated in Figure 11, which indicates by the dotted line box shows the expanded number of candidate records of Figure 9, if sensor data indicates that the air flow in the air actuator is normal, then the records indicated by the dash-dotted box can be excluded as candidates.

Before the filtering is performed, however, a further possibility is to make allowances for possible errors in the sensor data, as specified in the sensor data modification knowledge database 8. For example, with reference to Figure 11, a measurement may be taken from an air pressure sensor to indicate whether the air flow in the air actuator is normal. However, if it is known that the sensor only provides reliable measurements within an operating temperature range, the sensor data modification knowledge database may specify that the filtering out of the records indicated by the dash-dotted box is only allowed if the air pressure sensor indicates a normal pressure <u>and</u> a separate temperature sensor measurement indicates that the ambient temperature is within the operating temperature range. Thus the pressure measurement is modified by the supplementary temperature measurement. In a simpler example, if it is known or suspected that a particular sensor is faulty or that there is a problem with a communication line from a particular sensor, the sensor data modification knowledge database may specify that sensor data from that sensor is not to be used to filter the candidate failure mode and symptom data records.

Although not shown in Figure 7 or 10, an inspection of the target system may be performed after the confidence values have been calculated for the candidate records or, after the maintenance instruction has been generated and (further) sensor data obtained. Using this further data, as well as any original sensor data, the filtered failure report can be generated or re-generated (as the case may be), and the confidence values recalculated. Thus it is possible for the procedure to loop back as and when more sensor data becomes available.

More particularly, the maintenance instruction database 6 may contain diagnosis instructions as well as maintenance procedures for failure modes of the target system. The instruction generation unit 10 can then generate a diagnosis instruction for the target system, for example relating to the candidate data record having the highest calculated confidence value. The result of that diagnosis, in the form of (further) sensor data, can be used to generate or re-generate the filtered failure report and recalculate the confidence values. The diagnosis result can be included in the final maintenance instruction.

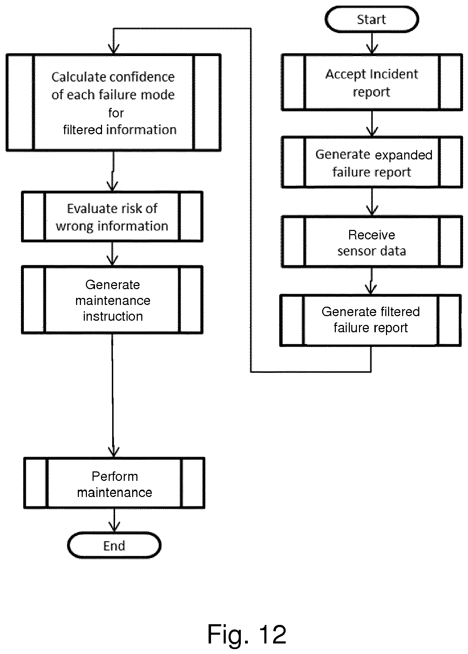

Figure 12 shows, in an embodiment, a flow chart of a further expanded procedure for fault identification. Relative to the first and second embodiments, the further expanded procedure includes a stage of evaluating the risk that wrong information has been used in the confidence value calculation. In other words, the sensitivity of the calculated confidence values to errors in relation to the candidate data records can be determined.

A change in confidence value for one candidate record can be defined by:

$$C(i,m) = (X\_mod - X\_org)/X\_org$$

where i is a candidate record number, m is an information modification pattern, X_org is the original confidence value for the $i^{th}$ record, and X_mod is the modified confidence value for the $i^{th}$ record under the $m^{th}$ information modification pattern. Different information modification patterns can be tested by varying the scores used to calculate the confidence values. For example, if a sensor provides a measurement which suggests a high probability of a fault in a given component, then that component may have a correspondingly high score for the sensor measurement in its confidence value calculation. One of the information modification patterns may then test for sensitivity to error in that measurement by lowering or eliminating the score for that sensor measurement.

For a given change information modification pattern, the total sensitivity associated with that pattern can be defined as:

$$T(m) = (\sum(C(i,m))^2)^{1/2}$$

where $\sum$ indicates summation over the i records. If $\sum(C(i, m))$ is minus, the procedure may disregard the particular information modification pattern for the purposes of sensitivity evaluation as it is likely that the modified pattern contains a contradiction.

If T(m) is large, this suggests that the changed information in that information modification pattern is important for the investigation of the target system, because if the information is wrong it can affect the whole inspection/maintenance process. Thus the risk evaluation stage makes it possible to include warnings in the subsequently generated maintenance instruction or diagnosis instruction about critical elements of the target system.

If the value of X_mod for the record having the largest X_org is larger than the value of X_org for that record, then this is an indication that the fault identification analysis could be based on incorrect information (e.g. a faulty sensor measurement which is removed in the respective information modification pattern). An appropriate message or warning can then be added to the maintenance instruction.

## Claims

1. A method of identifying faults in a target system (1, 2, 3), the method including steps of:

   providing a failure knowledge database (5) for the target system, wherein the failure knowledge database specifies a plurality of failure mode and symptom data records, each data record identifying (i) a component of the target system, (ii) a failure mode for that component and (iii) a corresponding failure symptom;
   providing an incident report correction database (7) which specifies, for each of at least a subset of the components of the failure knowledge database, one or more alternative components which are possible sources of reported failure symptoms and/or one or more possible alternative failure symptoms to reported failure symptoms, the alternative components and the alternative failure symptoms having corresponding failure mode and symptom data records in the failure knowledge database;

receiving an incident report specifying a particular component and a reported failure symptom;

identifying candidate failure mode and symptom data records which may explain the incident report by reference to the failure knowledge database, and further by using the incident report correction database to expand the number of candidate data records to include data records of alternative components and/or alternative failure symptoms which may explain the incident report;

calculating respective confidence values for the candidate data records;

comparing the calculated confidence values;

for each of the identified candidate failure mode and symptom data records, determining a sensitivity of the calculated confidence values to an error in relation to that data record; and

generating a maintenance instruction for the target system, the instruction pertaining to at least the candidate data record having the highest calculated confidence value, and when a high sensitivity is determined, a warning being included in the generated maintenance instruction identifying the respective data record.

2.  A method of identifying faults in a target system according to claim 1, wherein the step of determining a sensitivity of the calculated confidence values includes: (i) calculating for each candidate data record a change in confidence value $C(i,m) = (X\_mod-X\_org)/X\_org$, where $i$ is the candidate record number, $X\_org$ is the original confidence value for the $i^{th}$ record, and $X\_mod$ is a modified confidence value for the $i^{th}$ record under an information modification pattern $m$ in which a pattern of scores used to calculate the confidence values is varied, and (ii) calculating a total sensitivity to the information modification pattern $T(m) = (\sum(C(i,m))2)^{\frac{1}{2}}$, where $\sum$ indicates summation over the $i$ records.

3.  A method of identifying faults in a target system according to claim 2, further including a step of adding a warning to the maintenance instruction that the fault identification may be based on incorrect information if $X\_mod$ for the candidate data record having the largest $X\_org$ is larger than the value of $X\_org$ for that record.

4.  A method of identifying faults in a target system according to any one of the previous claims, wherein:

    the incident report correction database specifies links between pairs of the data records from the failure knowledge database when a functional relation exists between the respective failure modes of the paired data records, and
    in the identifying step, the data records of the alternative components and/or the alternative failure symptoms are directly or indirectly linked.

5.  A method of identifying faults in a target system according to any one of the previous claims, further including steps of:

    collecting sensor measurements relating to one or more failure modes; and
    before the calculating step, filtering the identified candidate failure mode and symptom data records by excluding identified candidate failure mode and symptom data records having failure modes which are inconsistent with the collected sensor measurements.

6.  A method of identifying faults in a target system according to claim 5, wherein the method further includes a step of providing a sensor measurement modification database (8) which specifies possible modifications to the collected sensor measurements;
    wherein the filtering step excludes identified candidate failure mode and symptom data records having failure modes which are inconsistent with modified collected sensor measurements derived from the sensor measurement modification database; and
    wherein the confidence values are calculated for the filtered candidate data records.

7.  A method of identifying faults in a target system according to any one of the previous claims, wherein the method further includes, after the comparing step and before the step generating a maintenance instruction, steps of:

    generating a diagnosis instruction for the target system, the instruction pertaining to at least the candidate data record having the highest calculated confidence value;
    performing diagnostics on the target system to determine a likelihood of the failure mode of the or each candidate data record in the diagnosis instruction; and
    adjusting the calculated confidence value of the or each candidate data record in the diagnosis instruction on the basis of the determined likelihood.

8. A method of identifying faults in a target system according to claim 7, wherein the step of performing diagnostics includes producing a diagnosis result, and the generated maintenance instruction includes the diagnosis result.

9. A method of identifying faults in a target system according to any one of the previous claims, wherein the method further includes a step of providing a maintenance instruction database (6) which specifies maintenance procedures for failure modes of the target system; and
wherein the generated maintenance instruction provides a maintenance procedure, derived from the maintenance instruction database, corresponding to the failure mode of the or each candidate data record in the maintenance instruction.

10. A method of identifying faults in a target system according to any one of the previous claims, wherein the target system is a railway vehicle, railway infrastructure or a railway operation system.

11. A method for repairing a target system including:

    performing the method of identifying faults of any one of the previous claims; and
    performing maintenance on the target system according to the generated maintenance instruction.

12. A computer system (100) programmed to perform the method of any one of claims 1 to 10.

13. A computer program comprising code which, when run on a computer, causes the computer to perform the method of any one of claims 1 to 10.

14. A computer readable medium storing the computer program of claim 13.

**Patentansprüche**

1. Verfahren zum Identifizieren von Fehlern in einem Zielsystem (1, 2, 3), wobei das Verfahren die folgenden Schritte umfasst:

    Bereitstellen einer Defekt-Wissensdatenbank (5) für das Zielsystem, wobei die Defekt-Wissensdatenbank eine Mehrzahl von Defektarten und Symptomdatenaufzeichnungen spezifiziert, wobei jede Datenaufzeichnung identifiziert (i) eine Komponente des Zielsystems, (ii) eine Defektart für diese Komponente und (iii) ein entsprechendes Defektsymptom;
    Bereitstellen einer Zwischenfallreport-Korrekturdatenbank (7), welche für jede zumindest einer Teilmenge von Elementen der Defekt-Wissensdatenbank eine oder mehrere alternative Elemente angibt, die mögliche Quellen der berichteten Defektsymptome sind, und/oder eines oder mehrere alternative Defektsymptome für berichtete Defektsymptome, wobei die alternativen Elemente und die alternativen Defektsymptome entsprechende Defektarten und Symptomdatenaufzeichnungen in der Defekt-Wissensdatenbank haben;
Empfangen eines Zwischenfallberichts, welcher eine bestimmte Komponente und ein berichtetes Defektsymptom angibt;
Identifizieren von Kandidaten für Defektart und Symptomdatenaufzeichnung, welche den Zwischenfallbericht erklären können, durch Bezugnahme auf die Defekt-Wissensdatenbank, wobei ferner die Zwischenfallberichtskorrekturdatenbank benutzt wird, um die Anzahl der Kandidaten für die Datenaufzeichnungenen zu erweitern, indem Datenaufzeichnungen für alternative Komponenten und/oder alternative Defektsymptome aufgenommen werden, welche den Zwischenfallbericht erklären können;
Berechnen von jeweiligen Zuverlässigkeitswerten für die Kandidaten von Datenaufzeichnungen;
Vergleichen der berechneten Zuverlässigkeitswerte;
Ermitteln einer Empfindlichkeit der berechneten Zuverlässigkeitswerte gegenüber einem Fehler in Bezug auf diese Datenaufzeichnung für jeden der identifizierten Kandidaten für Defektart und Symptomdatenaufzeichnungen; und
Erzeugen einer Wartungsanweisung für das Zielsystem, wobei die Anweisung zu zumindest derjenigen Kandidaten-Datenaufzeichnung gehört, die den höchsten berechneten Zuverlässigkeitswert hat, und, wenn eine hohe Empfindlichkeit ermittelt wird, Einfügen einer Warnung in die erzeugte Wartungsanweisung, welche die jeweilige Datenaufzeichnung identifiziert.

2. Verfahren zum Identifizieren von Fehlern in einem Zielsystem nach Anspruch 1, wobei der Schritt des Bestimmens einer Empfindlichkeit des berechneten Zuverlässigkeitswerts umfasst: (i) Berechnen einer Änderung im Zuverlässigkeitswert $C(i,m) = (X\_mod - X\_org)/X\_org$ für jeden Kandidat der Datenaufzeichnungen, wobei i der Kandidat für die Datenaufzeichnung ist, $X\_org$ der ursprüngliche Zuverlässigkeitswert für die i-te Aufzeichnung ist und $X\_mod$ ein modifizierter Zuverlässigkeitswert für die i-te Aufzeichnung gemäß einem Informationsmodifikationsmuster m ist, in welchem ein Muster von Punktzahlen, welche zur Berechnung der Zuverlässigkeitswerte verwendet werden, variiert wird, und (ii) Berechnen der gesamten Empfindlichkeit gegenüber dem Infor-

mationsmodifikationsmuster T(m) = ($\sum$ (C(i,m))2)$^{1/2}$, wobei $\sum$ die Summation über die i-Aufzeichnungen bedeutet.

3. Verfahren zum Identifizieren von Fehlern in einem Zielsystem nach Anspruch 2, ferner umfassend einen Schritt des Hinzufügens einer Warnung zu der Wartungsanweisung, dass die Fehleridentifikation auf inkorrekten Informationen beruhen kann, wenn X_mod für den Kandidaten der Datenaufzeichnung mit den Größen X_org größer als der Wert von X_org für diese Aufzeichnung ist.

4. Verfahren zum Identifizieren von Fehlern in einem Zielsystem nach einem der vorhergehenden Ansprüche, wobei:

    die Zwischenfallberichtsdatenbank Verknüpfungen zwischen Paaren der Datenaufzeichnungen aus der Defekt-Wissensdatenbank angibt, wenn eine funktionale Beziehung zwischen den jeweiligen Defektarten der gepaarten Datenaufzeichnungen existiert, und
    in dem Identifikationsschritt die Datenaufzeichnungen der alternativen Komponenten und/oder der alternativen Defektsymptome direkt oder indirekt verknüpft werden.

5. Verfahren zum Identifizieren von Fehlern in einem Zielsystem nach einem der vorhergehenden Ansprüche, ferner umfassend die folgenden Schritte:

    Sammeln von Sensormesswerten betreffend einen oder mehrere Defektarten; und
    Filtern der identifizierten Kandidaten für Defektart und Symptomdatenaufzeichnung vor dem Berechnungsschritt, indem identifizierte Kandidaten für Defektart und Symptomdatenaufzeichnung ausgeschlossen werden, welche Defektarten haben, die inkonsistent mit den gesammelten Sensormessungen sind.

6. Verfahren zum Identifizieren von Fehlern in einem Zielsystem nach Anspruch 5, wobei das Verfahren ferner den Schritt der Bereitstellung einer Sensormessungsmodifikationsdatenbank (8) enthält, welche mögliche Modifikationen der gesammelten Sensormesswerte angibt;

    wobei der Schritt des Filterns identifizierte Kandidaten für Defektart und Symptomdatenaufzeichnungenen ausschließt, welche Defektarten haben, die inkonsistent mit modifizierten gesammelten Sensormesswerten sind, die von der Sensormesswertmodifikationsdatenbank abgeleitet sind; und
    wobei die Zuverlässigkeitswerte für die gefilterten Kandidaten für Datenaufzeichnungen berechnet werden.

7. Verfahren zum Identifizieren von Fehlern in einem Zielsystem nach einem der vorhergehenden Ansprüche, wobei das Verfahren ferner nach dem Schritt des Vergleichens und vor dem Schritt des Erzeugens von Wartungsanweisungen die folgenden Schritte umfasst:

    Erzeugen einer Diagnoseanweisung für das Zielsystem, wobei die Anweisung zumindest zu dem Kandidaten für diejenige Datenaufzeichnung gehört, welche den höchsten berechneten Zuverlässigkeitswert hat;
    Durchführen einer Diagnose des Zielsystems zum Bestimmen einer Wahrscheinlichkeit der Defektart für jeden Kandidaten der Datenaufzeichnung in der Diagnoseanweisung; und
    Anpassen des berechneten Zuverlässigkeitswerts für jeden Kandidaten für die Datenaufzeichnung in der Diagnoseanweisung abhängig von der ermittelten Wahrscheinlichkeit.

8. Verfahren zum Identifizieren von Fehlern in einem Zielsystem nach Anspruch 7, wobei der Schritt der Durchführung der Diagnose das Erzeugen eines Diagnosergebnisses umfasst und die erzeugte Wartungsanweisung das Diagnoseergebnis enthält.

9. Verfahren zum Identifizieren von Fehlern in einem Zielsystem nach einem der vorhergehenden Ansprüche, wobei das Verfahren ferner den Schritt der Bereitstellung einer Wartungsanweisungsdatenbank (6) umfasst, welche Wartungsprozesse für Defektarten des Zielsystems spezifiziert; und

    wobei die erzeugte Wartungsanweisung einen Wartungsprozess bereitstellt, der von der Wartunsanweisungsdatenbank abgeleitet ist und welcher der Defektart oder jedem Kandidaten für die Datenaufzeichnung in der Wartungsanweisung entspricht.

10. Verfahren zum Identifizieren von Fehlern in einem Zielsystem nach einem der vorhergehenden Ansprüche, wobei das Zielsystem ein Schienenfahrzeug, eien Schieneninfrastruktur oder ein Schienennetzbetriebssystem ist.

11. Verfahren zum Reparieren eines Zielsystems, umfassend:

    Durchführen des Verfahrens zum Identifizieren von Fehlern nach einem der vorhergehenden Ansprüche, und
    Durchführen einer Wartung des Zielsystems gemäß der erzeugten Wartungsanweisung.

**12.** Computersystem (100), welches programmiert ist zur Ausführung des Verfahrens nach einem der Ansprüche 1 bis 10.

**13.** Computerprogramm umfassend Code, der bei seiner Ausführung auf einem Computer bewirkt, dass der Computer das Verfahren nach einem der Ansprüche 1 bis 10 durchführt.

**14.** Computerlesbares Medium, welches das Computerprogramm nach Anspruch 13 speichert.

**Revendications**

**1.** Procédé d'identification de défauts dans un système cible (1, 2, 3), le procédé incluant les étapes consistant à :

fournir une base de données de connaissances de défaillances (5) pour le système cible, dans lequel la base de données de connaissances de défaillances spécifie une pluralité d'enregistrements de données de modes et de symptômes de défaillance, chaque enregistrement de données identifiant (i) un composant du système cible, (ii) un mode de défaillance pour ce composant et (iii) un symptôme de défaillance correspondant,
fournir une base de données de correction de rapport d'incident (7) qui spécifie, pour chaque composant d'au moins un sous-ensemble des composants de la base de données de connaissances de défaillances, un ou plusieurs composants alternatifs qui sont des sources possibles de symptômes de défaillance rapportés et/ou un ou plusieurs symptômes de défaillance possibles en alternative aux symptômes de défaillance rapportés, les composants alternatifs et les symptômes de défaillance alternatifs ayant des enregistrements de données de modes et de symptômes de défaillance correspondants dans la base de données de connaissances de défaillances,
recevoir un rapport d'incident spécifiant un composant particulier et un symptôme de défaillance rapporté,
identifier des enregistrements de données candidats de modes et de symptômes de défaillance qui peuvent expliquer le rapport d'incident par référence à la base de données de connaissances de défaillances, et également en utilisant la base de données de correction de rapport d'incident pour étendre le nombre d'enregistrements de données candidats afin d'inclure des enregistrements de données de composants alternatifs et/ou de symptômes de défaillance alternatifs qui peuvent expliquer le rapport d'incident,
calculer des valeurs de confiance respectives pour les enregistrements de données candidats,
comparer les valeurs de confiance calculées,
pour chacun des enregistrements de données candidats de modes et de symptômes de défaillance identifiés, déterminer une sensibilité des valeurs de confiance calculées à une erreur en liaison avec cet enregistrement de données, et
générer une instruction de maintenance pour le système cible, l'instruction se rapportant au moins à l'enregistrement de données candidat ayant la valeur de confiance calculée la plus élevée, et lorsqu'une sensibilité élevée est déterminée, un avertissement étant inclus dans l'instruction de maintenance générée identifiant l'enregistrement de données respectif.

**2.** Procédé d'identification de défauts dans un système cible selon la revendication 1, dans lequel l'étape de détermination d'une sensibilité des valeurs de confiance calculées inclut: (i) de calculer pour chaque enregistrement de données candidat un changement de valeur de confiance $C(i,m) = (X\_mod - X\_org)/X\_org$, où i est le numéro d'enregistrement candidat, X\_org est la valeur de confiance d'origine pour le $i^{ème}$ enregistrement, et X\_mod est une valeur de confiance modifiée pour le $i^{ème}$ enregistrement sous un modèle de modification d'informations m dans lequel un modèle de scores utilisé pour calculer les valeurs de confiance a varié, et (ii) de calculer une sensibilité totale au modèle de modification d'informations $T(m) = (\sum(C(i,m))2)^{1/2}$, où E indique une sommation sur les i enregistrements.

**3.** Procédé d'identification de défauts dans un système cible selon la revendication 2, incluant en outre une étape consistant à ajouter un avertissement à l'instruction de maintenance indiquant que l'identification de défauts peut être basée sur des informations incorrectes si X\_mod pour l'enregistrement de données candidat ayant la valeur X\_org la plus élevée est plus grand que la valeur de X\_org pour cet enregistrement.

**4.** Procédé d'identification de défauts dans un système cible selon l'une quelconque des revendications précédentes, dans lequel :

la base de données de correction de rapport d'incident spécifie des liens entre des paires des enregistrements de données provenant de la base de données de connaissances de défaillances lorsqu'une relation fonctionnelle existe entre les modes de défaillance respectifs des enregistrements de données appariés, et
à l'étape d'identification, les enregistrements de données des composants alternatifs et/ou des symptômes de défaillance alternatifs sont directement ou indirectement liés.

5. Procédé d'identification de défauts dans un système cible selon l'une quelconque des revendications précédentes, incluant en outre les étapes consistant à :

collecter des mesures de capteurs se rapportant à un ou plusieurs modes de défaillance, et avant l'étape de calcul, filtrer les enregistrements de données candidats de modes et de symptômes de défaillance identifiés en excluant les enregistrements de données candidats de modes et de symptômes de défaillance identifiés ayant des modes de défaillance qui sont incohérents avec les mesures de capteurs collectées.

6. Procédé d'identification de défauts dans un système cible selon la revendication 5, dans lequel le procédé inclut en outre une étape consistant à fournir une base de données de modifications de mesures de capteurs (8) qui spécifie des modifications possibles des mesures de capteurs collectées, dans lequel l'étape de filtrage exclut des enregistrements de données candidats de modes et de symptômes de défaillance identifiés ayant des modes de défaillance qui sont incohérents avec des mesures de capteurs collectées modifiées obtenues à partir de la base de données de modifications de mesures de capteurs, et dans lequel les valeurs de confiance sont calculées pour les enregistrements de données candidats filtrés.

7. Procédé d'identification de défauts dans un système cible selon l'une quelconque des revendications précédentes, dans lequel le procédé inclut en outre, après l'étape de comparaison et avant l'étape de génération d'une instruction de maintenance, les étapes consistant à :

générer une instruction de diagnostic pour le système cible, l'instruction se rapportant au moins à l'enregistrement de données candidat ayant la valeur de confiance calculée la plus élevée, réaliser un diagnostic sur le système cible pour déterminer une probabilité du mode de défaillance de l'enregistrement ou de chaque enregistrement de données candidat dans l'instruction de diagnostic, et ajuster la valeur de confiance calculée de l'enregistrement ou de chaque enregistrement de données candidat dans l'instruction de diagnostic sur la base de la probabilité déterminée.

8. Procédé d'identification de défauts dans un système cible selon la revendication 7, dans lequel l'étape de réalisation d'un diagnostic inclut la production d'un résultat de diagnostic, et l'instruction de maintenance générée inclut le résultat de diagnostic.

9. Procédé d'identification de défauts dans un système cible selon l'une quelconque des revendications précédentes, dans lequel le procédé inclut en outre une étape de fourniture d'une base de données d'instructions de maintenance (6) qui spécifie des procédures de maintenance pour des modes de défaillance du système cible, et dans lequel l'instruction de maintenance générée produit une procédure de maintenance, obtenue à partir de la base de données d'instructions de maintenance, correspondant au mode de défaillance de l'enregistrement ou de chaque enregistrement de données candidat dans l'instruction de maintenance.

10. Procédé d'identification de défauts dans un système cible selon l'une quelconque des revendications précédentes, dans lequel le système cible est un véhicule ferroviaire, une infrastructure ferroviaire ou un système d'exploitation ferroviaire.

11. Procédé pour réparer un système cible incluant :

de mettre en oeuvre le procédé d'identification de défauts selon l'une quelconque des revendications précédentes, et de réaliser la maintenance du système cible en fonction de l'instruction de maintenance générée.

12. Système informatique (100) programmé pour mettre en oeuvre le procédé selon l'une quelconque des revendications 1 à 10.

13. Programme informatique comportant du code qui, lorsqu'il s'exécute sur un ordinateur, amène l'ordinateur à mettre en oeuvre le procédé selon l'une quelconque des revendications 1 à 10.

14. Support lisible par ordinateur mémorisant le programme informatique de la revendication 13.

## Fig. 1

Fig. 1

## Fig. 2

| No. | Component | Failure Mode | Failure Cause | Failure Symptom | | |
|---|---|---|---|---|---|---|
| | | | | Description | Safety | Operation |
| 1 | Door | Fail to open | Can't move door leaf | Passenget can not get on/off | Low | High |
| 2 | | Opening time too long | Problem in door open detection | Operation delay | Low | Mid |
| 3 | | | Movement too slow | | | |
| 4 | | Opening time too short | Movement too fast | Passenger hit by door leaf | High | Mid |
| 5 | Door rail | Large friction | Foreign obstacle | Prevent movement | Low | Mid |
| 6 | | | Grease loss | | | |
| 7 | Door leaf | Large friction | Deformation | Prevent movement | Mid | Mid |
| 8 | Air actuator | Not enough force | High resistance | Slow movement | Low | Mid |
| 9 | | | Small air flow | | | |
| 10 | | Too much force | Large air flow | Fast movement | High | High |
| 11 | Piston | Large friction | Grease loss | Prevent movement | Low | Mid |
| 12 | Mount | Wrong alignment | Loose fitting | Prevent movement | Mid | Low |
| 13 | Piping | Low pressure | Compressor fault | Low power supply | N/A | N/A |
| 14 | Adjustment valve | Too narrow pasToo | Wrong setting (close) | Small air flow | Low | Mid |
| 15 | | Too wide pass | Wrong setting (open) | Large air flow | | |

Column 1 → Component
Column 2 → Failure Mode
Column 3 → Failure Cause
Column 4 → Failure Symptom

Fig. 2

Fig. 3

Failure-Cause link to upper level component

Upper level

Lower level

Failure-Cause link
from lower level component

Fig. 4

14

Fig. 5

Fig. 6

Fig. 7

20

| | | |
|---|---|---|
| Incident date time | 01/09/2012 15:35:15 | } 23 |
| Asset ID | Vehicle0001 ▽ | } 24 |
| Component | Door ▽ | |
| Location | Location A ▽ | } 21 |
| Failure mode | Opening time too long ▽ | |
| Symptom (Free text) | Saloon door takes longer time to open than usual. Abnormal noise came from door rail mechanism. | } 22 |

Fig. 8

Fig. 9

```
                                                        ┌─────────┐
                                                        │  Start  │
                                                        └────┬────┘
                                                             │
                                                             ▼
┌───┬──────────────────────┬───┐         ┌───┬──────────────────────┬───┐
│   │  Calculate confidence │   │         │   │   Accept Incident    │   │
│   │  of each failure mode │   │         │   │       report         │   │
│   │         for           │   │         │   │                      │   │
│   │  filtered information │   │         └───┴──────────┬───────────┴───┘
└───┴──────────┬───────────┴───┘                        │
               │                                        ▼
               │                         ┌───┬──────────────────────┬───┐
               │                         │   │  Generate expanded   │   │
               │                         │   │    failure report    │   │
               │                         └───┴──────────┬───────────┴───┘
               ▼                                        │
┌───┬──────────────────────┬───┐                        ▼
│   │      Generate         │   │         ┌───┬──────────────────────┬───┐
│   │    maintenance        │   │         │   │      Receive         │   │
│   │    instruction        │   │         │   │    sensor data       │   │
└───┴──────────┬───────────┴───┘         └───┴──────────┬───────────┴───┘
               │                                        │
               │                                        ▼
               │                         ┌───┬──────────────────────┬───┐
               │                         │   │   Generate filtered  │   │
               │                         │   │    failure report    │   │
               │                         └───┴──────────────────────┴───┘
               ▼
┌───┬──────────────────────┬───┐
│   │      Perform          │   │
│   │    maintenance        │   │
└───┴──────────┬───────────┴───┘
               │
               ▼
          ┌─────────┐
          │   End   │
          └─────────┘
```

# Fig. 10

Fig. 11

```
                                                    ┌─────────────┐
                                                    │    Start    │
                                                    └──────┬──────┘
                                                           │
                                                           ▼
┌──┬───────────────────────┬──┐          ┌──┬──────────────────────┬──┐
│  │   Calculate confidence │  │          │  │   Accept Incident    │  │
│  │   of each failure mode │  │          │  │       report         │  │
│  │          for           │  │          │  │                      │  │
│  │   filtered information  │  │          └──┴──────────┬───────────┴──┘
└──┴───────────┬───────────┴──┘                         │
               │                                        ▼
               ▼                          ┌──┬──────────────────────┬──┐
┌──┬───────────────────────┬──┐          │  │  Generate expanded   │  │
│  │    Evaluate risk of    │  │          │  │    failure report    │  │
│  │   wrong information     │  │          └──┴──────────┬───────────┴──┘
└──┴───────────┬───────────┴──┘                         │
               │                                        ▼
               ▼                          ┌──┬──────────────────────┬──┐
┌──┬───────────────────────┬──┐          │  │      Receive         │  │
│  │      Generate          │  │          │  │    sensor data       │  │
│  │     maintenance        │  │          └──┴──────────┬───────────┴──┘
│  │    instruction         │  │                         │
└──┴───────────┬───────────┴──┘                         ▼
               │                          ┌──┬──────────────────────┬──┐
               │                          │  │   Generate filtered  │  │
               ▼                          │  │     failure report   │  │
┌──┬───────────────────────┬──┐          └──┴──────────────────────┴──┘
│  │       Perform          │  │
│  │     maintenance        │  │
└──┴───────────┬───────────┴──┘
               │
               ▼
        ┌─────────────┐
        │     End     │
        └─────────────┘
```

# Fig. 12

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012146908 A